Europäisches Patentamt

European Patent Office

Office européen des brevets

(11) Publication number: **0 047 667**
**B1**

# (12) EUROPEAN PATENT SPECIFICATION

(45) Date of publication of patent specification: **04.12.85**

(51) Int. Cl.[4]: **F 16 H 47/08**

(21) Application number: **81304106.8**

(22) Date of filing: **08.09.81**

(54) Automatic transmission with overdrive device.

(30) Priority: **09.09.80 JP 125438/80**

(43) Date of publication of application:
**17.03.82 Bulletin 82/11**

(45) Publication of the grant of the patent:
**04.12.85 Bulletin 85/49**

(84) Designated Contracting States:
**DE FR GB IT SE**

(56) References cited:
**DE-A-2 743 581**
**FR-A-2 390 645**
**GB-A-1 508 975**
**GB-A-2 037 383**
**US-A-3 314 307**
**US-A-3 486 398**

**ATZ, 72 (1970) 4, p. 118**

(73) Proprietor: **FUJI JUKOGYO KABUSHIKI KAISHA**
**7-2 Nishishinjuku 1-chome Shinjuku-ku**
**Tokyo (JP)**

(72) Inventor: **Kodama, Masayuki**
**940-181 Utsugimachi**
**Hachioji-shi Tokyo (JP)**
Inventor: **Takano, Toshio**
**1-3-2 Sakaecho Hamuramachi**
**Nishitama-gun (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to an automatic transmission provided with overdrive device of the type in which a torque converter, an automatic transmission and a final reduction gear are integrally assembled in one unit, and more particularly relates to an automatic transmission which is directly connected with an engine in the "overdrive" condition.

In a conventional automatic transmission with an overdrive device, power from the engine crank shaft is transmitted to an overdrive device through a torque converter even in the "overdrive" condition. In such construction it has been impossible to attain as low fuel consumption as manual transmission, because of transmission losses due to the torque converter. Further, planetary gears are generally used for gear mechanism of the overdrive device, since the power transmitting flow is arranged axially. Such a construction makes the apparatus large and complicated. Also the apparatus should be provided with at least two pairs of transmission elements, which causes complication of the hydraulic system.

One example of a known type of automatic transmission of this kind is shown in DE—A—2743581 which discloses an automatic transmission including a torque converter 1 comprising an impeller 4 connected to the crankshaft of an internal combustion engine and arranged to pump oil to drive a turbine 5, an automatic transmission apparatus 2 comprising a planetary gear device 2 and fluid operated brake and clutch devices (9, 10); connected to the output shaft 8 of said turbine, a final reduction gear device 28 connected to an output shaft (not shown) of said automatic transmission apparatus, said output shaft being arranged at a distance from the output shaft 8 of the turbine, the automatic transmission also comprising engaging means 21, 23 for an overdrive gear ratio 4 (see page 7) said overdrive gear ratio providing a mechanical power transmitting flow without the interposition of the torque converter.

According to the present invention, there is provided an automatic transmission of a motor vehicle with an overdrive transmission said automatic transmission having a torque converter (2) provided in an automatic transmission apparatus (3) having a planetary gear device (14) and clutches (16, 17) and operatively connected with an output shaft of an engine, an oil pump shaft (12) connected with an impeller of the torque converter, an oil pump (27) driven by said oil pump shaft,

a final reduction device (4) for transmitting the output of the forward clutch to a differential mechanism (23) through an output shaft (21) of the main transmission, and an overdrive device (6),

characterised in that said overdrive device comprises an overdrive clutch (29) mounted on an extending portion (12') of said oil pump shaft, an overdrive gear train (28a, 28b), and an intermediate shaft (30) for transmitting the rotation of said overdrive gear train to said final reduction device, and in that said intermediate shaft (30) is arranged at a distance from said pump drive shaft (12), the overdrive device comprising a gear train between the axis of said shafts (12, 30).

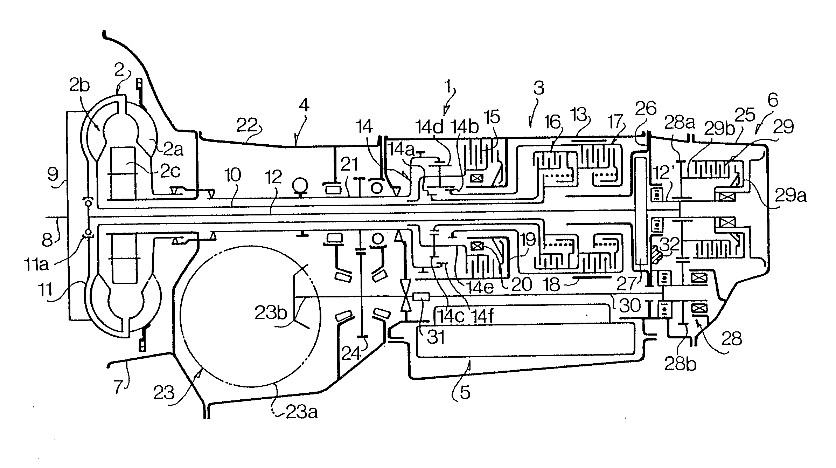

One embodiment of the invention will now be described by way of example with reference to the accompanying drawing which is a diagrammatic cross-section of an automatic transmission system.

In the figure, numeral 1 generally designates a trans-axle type transmission for driving the front wheels of a vehicle, which comprises a torque converter 2, a three-speed automatic transmission device 3 a final reduction device 4 disposed between the automatic transmission device 3 and the torque converter 2, a valve block 5 of hydraulic control means provided in a lower part of the automatic transmission device 3, and an overdrive device 6 arranged in a rear part of automatic transmission device 3 opposite the torque converter 2.

The torque converter 2 is in a converter housing 7 containing a pump impeller 2a, a turbine 2b and a stator 2c. The pump impeller 2a is in direct connection with an engine crankshaft 8 through a drive plate 9. A turbine shaft 10 extends from the turbine 2b and an oil pump driving shaft 12 extends from a converter cover 11 provided integrally with the drive plate 9 through a damper 11a. The pump impeller 2a is rotated by the engine through the crankshaft 8 to rotate the turbine 2b by means of oil flow as regulated by the stator 2c.

It should be noted that the damper 11a is provided to prevent the influence of torque variation occurring during the overdrive condition from impinging directly on the converter cover.

The automatic transmission aparatus 3 has a transmission case 13 in which a planetery gear 14, and a low-and-reverse brake 15, a forward clutch 16, and reverse clutch 17 are arranged in that order. The turbine shaft 10 connected to the torque converter 2 is connected to a forward sun gear 14a of the planetary gear 14 through the forward clutch 16, and at the same time connected to a reverse sun gear 14b through the reverse clutch 17 to apply the output of the turbine shaft 10 thereto. Further, a brake band 18 is provided on the drum side of the reverse clutch 17 to lock the reverse sun gear 14b. In the planetary gear 14, a short pinion 14c, engaging with the forward sun gear 14a and a long pinion 14d, engaging with the reverse sun gear 14b, are supported in a carrier 14e which supports the low-and-reverse brake 15. The carrier is locked by a one-way clutch 20 provided between the low-and-reverse brake 15 and a centre support 19. An output shaft 21 extends from the ring gear 14f engaging with the long pinion 14d to the torque converter.

The front wheel final reduction device 4 has a case 22 secured between the converter housing 7 and the transmission case 13. The case 22 contains a crown gear of a differential mechanism 23 for front wheels under units including the turbine shaft 10. Output shaft 21 is coupled with a drive pinion 23b through a reduction gear 24 for transmitting the power to the crown gear 23a.

Further, the valve block 5 of hydraulical control device contains therein various valves and oil passages (not shown). The hydraulic control device is adapted to supply or discharge the pressure oil to or from servo mechanism of the low-and-reverse brake 15 and clutches 16, 17, and the brake band 18 of the automatic transmission device 3 in accordance with the transmitting pattern according to the relation between vehicle speed and engine load.

The overdrive device 6 is provided within a transmission cover 25 which is fixed to the rear end of the transmission case 13. Disposed between the transmission case 13 and the transmission cover 25 is an oil pump 27 connected to an oil pump shaft 12 which is engaged with and driven by the engine crankshaft 8. The oil pump drive shaft 12 extends into the transmission cover 25 and is connected to an extension 12'. An overdrive gear device 28 and an overdrive clutch 29 are disposed on the extension 12'. The overdrive gear device 28 comprises a large driving gear 28a and a small driven gear 28b which engage with each other. The drive gear 28a is rotatably mounted on the extension 12' and the driven gear 28b is secured to a rearward extension of the drive pinion 23b, so as to provide a speed-up device. An overdrive clutch 29, which is hydraulic, comprises a drum 29a secured to the extension 12' and a hub 29b secured to the drive gear 28a, and is adapted to establish or cut off the connection of the oil pump drive shaft 12 with drive gear 28a. Further, the driven gear 28b is connected to the drive pinion 23b of the front-wheels final reduction device 4 through an intermediate shaft 30 and a spline joint 31.

The clutch support 26 is provided with a valve 32 to control engagement of the overdrive. The valve 32 is adapted to discharge the oil from forward clutch 16 and to apply the oil to the overdrive clutch 29 to achieve the engagement, when the vehicle reaches an operating condition suitable for overdrive operation.

With this construction, when oil is discharged from the overdrive clutch 29, the overdrive gear device 28 is disengaged from the oil pump drive shaft 12, so that the drive shaft 12 drives only the pump 27. If the forward clutch 16 of the automatic transmission device 3 is engaged, power from the engine crankshaft 8 is transmitted to the turbine shaft 10 through the torque converter 2 and further to the forward sun gear 14a of the planetary gear 14 to establish a forward driving speed condition. When the carrier 14e is locked by the one-way clutch 20 or the low-and-reverse brake 15, the largest gear ratio transmission is provided. From the output shaft 21, the output is transmitted to the drive pinion 23b of the differential mechanism 23 through the reduction gear 24 and further to the front wheels of the vehicle through the crown gear 23a to establish the 1st-speed driving condition. When the vehicle reaches a predetermined speed, the brake band 18 in place of the low-and-reverse brake 15 actuates to lock the reverse sun gear 14b. Thus, power transmission of a gear ratio smaller than the above-mentioned 1st-speed, that is, the 2nd-speed driving condition is established. When the vehicle speed is further increased, the reverse clutch 17 instead of the brake band 18 is engaged. Accordingly, the planetary gear device is integrated and the turbine shaft 10 and the output shaft 21 are directly connected with each other to transfer the output from the turbine shaft 10 to the front-wheels, at the 3rd-speed ratio.

If, as an example, during high-speed driving in the 3rd-speed, the overdrive clutch 29 is engaged after disengaging the forward clutch 16 of the automatic transmission apparatus by the valve 32, the planetary gear 14 becomes incapable of automatic transmission operation because no power is applied to the forward sun gear 14a. On the contrary, the oil pump drive shaft 12 is engaged with the overdrive gear device 28 because of the engagement of the overdrive clutch 29. Thus, power from the oil pump drive shaft 12 directly connected to the engine crankshaft 8 is transmitted to the overdrive device 28 and the speed is increased by the drive and the driven gears 28a and 28b. The power from the intermediate shaft 30 of the driven gear 28b is transmitted to the front-wheels in the course of the drive pinion 23b and the crown gear 23a of the differential mechanism 23. Thus, the vehicle is driven in overdrive by a direct driving connection without transmission-loss by fluid in the torque converter.

In this condition, the power transmitted to the turbine shaft 10 through the torque converter is applied to the reverse sun gear 14b of the planetary gear 14 because of the engagement of the reverse clutch 17 in the 3rd-speed and the power transmitted to the drive pinion 23b of the differential mechanism 23 is reversely applied to the ring gear 14f of the planetary gear 14 through the reduction gear 24 and the output shaft 21. However, the carrier 14e is free to rotate, since the one-way clutch 20 and the low-and-reverse brake 15 are released. As a result, the planetary gear 14 idles without bringing about any effect.

Changing to the overdrive gear device from the 1st-speed drive or the 2nd-speed drive may also be performed in the same way as above described. Operation in the reverse way causes the overdrive condition to release and to cause power to be transmitted by the automatic transmission device 3.

In this construction the overdrive device may be directly connected with the engine without passing through the torque converter. Therefore, the transmission-loss in the torque converter 2 is avoided, causing the improvement of fuel consumption as well as output power. Since the overdrive device is fixed on the rear part of the automatic transmission device 3 so as to transmit the power from the oil pump drive shaft 12 to the final reduction device 4, the automatic transmission device 3, the final reduction device 4, and the oil pump drive shaft 12 can also be used for the overdrive device, which simplifies the construction.

## Claims

1. An automatic transmission of a motor vehicle with an overdrive transmission said automatic transmission having a torque converter (2) provided in an automatic transmission apparatus (3) having a planetary gear device (14) and clutches (16, 17) and operatively connected with an output shaft of an engine, an oil pump shaft (12) connected with an impeller of the torque converter, an oil pump (27) driven by said oil pump shaft,

a final reduction device (4) for transmitting the output of the forward clutch to a differential mechanism (23) through an output shaft (21) of the main transmission, and an overdrive device (6),

characterised in that said overdrive device comprises an overdrive clutch (29) mounted on an extending portion (12') of said oil pump shaft, an overdrive gear train (28a, 28b), and an intermediate shaft (30) for transmitting the rotation of said overdrive gear train to said final reduction device, and in that said intermediate shaft (30) is arranged at a distance from said pump drive shaft (12), the overdrive device comprising a gear train between the axis of said shafts (12, 30).

2. An automatic transmission according to claim 1 wherein said overdrive device is disposed at the rear of said automatic transmission apparatus.

## Revendications

1. Une transmission automatique pour un véhicule à moteur comportant une transmission avec surmultiplication, cette transmission automatique possédant un convertisseur de couple (2) incorporé dans un dispositif de transmission automatique (3) ayant un train planétaire (14) et des embrayages (16, 17), et accouplé fonctionnellement à un arbre de sortie d'un moteur, un arbre de pompe à huile (12) accouplé à une roue à ailettes du convertisseur de couple, un pompe à huile (27) entraînée par l'arbre de pompe à huile,

un dispositif réducteur final (4) destiné à transmettre la puissance de sortie de l'embrayage de marche avant à un différentiel (23), par l'intermédiaire d'un arbre de sortie (21) de la transmission principale, et un dispositif de surmultiplication (6),

caractérisée en ce que le dispositif de surmultiplication (29) monté sur une partie en prolongment (12') de l'arbre de pompe à huile, un train d'engrenages de surmultiplication (28a, 28b) et une arbre intermédiaire (30) destiné à transmettre la rotation du train D'engrenages de surmultiplication au dispositif réducteur final, et en ce que l'arbre intermédiaire (30) est disposé à une certaine distance de l'arbre d'entraînement de la pompe (12), le dispositif de surmultiplication comprenant un train d'engrenages placé entre les axes desdits arbres (12, 30).

2. Une transmission automatique selon la revendication 1, caractérisée en ce que le dispositif de surmultiplication est placé à l'arrière du dispositif de transmission automatique.

## Patentansprüche

1. Mit Overdrive ausgerüstetes Automatikgetriebe eines Kraftfahrzeugs, mit einem Drehmomentwandler (2) in einem automatischen Kraftübertragungsgerät (3), der ein an die Ausgangswelle eines Motors angeschlossenes Planetengetriebe (14) sowie Kupplungen (16, 17), eine mit einem Schaufelrad des Drehmomentwandlers verbundene Ölpumpenwelle (12) und eine von der Ölpumpenwelle angetriebene Ölpumpe (27) aufweist, mit einem abschließenden Untersetzungsgetriebe (4), welches den Ausgang der Vorwärtskupplung über eine Abtriebswelle (21) des Hauptgetriebes auf ein Differential (23) überträgt, und mit einer Overdrive-Einrichtung (6), dadurch gekennzeichnet, daß die Overdrive-Einrichtung eine auf einem Fortsatz (12') der Ölpumpenwelle befestigte Overdrive-Kupplung (29), einen Overdrive-Getriebezug (28a, 28b) und eine Zwischenwelle (30) zum Übertragen der Rotation des Overdrive-Getriebezugs auf das abschließende Untersetzungsgetriebe aufweist, und daß die Zwischenwelle (30) mit Abstand von der Pumpenantriebswelle (12) angeordnet ist, wobei die Overdrive-Einrichtung einen Getriebezug zwischen den Achsen der Wellen (12, 30) aufweist.

2. Automatikgetriebe nach Anspruch 1, dadurch gekennzeichnet, daß die Overdrive-Einrichtung am hinteren Ende des automatischen Kraftübertragungsgeräts angeordnet ist.